# EUROPEAN PATENT APPLICATION

(11) **EP 1 749 735 A1**
(43) Date of publication of application: **07.02.2007**
(21) Application number: 05107146.2
(22) Date of filing: 03.08.2005
(51) Int. Cl.: B62K 25/28

(54) **Rear suspension system**

(71) Applicant: APRILIA S.P.A., 30033 Noale (Venezia) (IT)
(72) Inventor: Raffaelli, Andrea, 30033, Noale (Venezia) (IT)
(74) Representative: Coppo, Alessandro

(57) **Abstract**

Rear suspension system (100) for vehicles, in particular for two-wheel vehicles, comprising an engine (1) connected to a frame (2), and with an oscillating drive group, comprising at least one rear fork (3), hinged to the engine (1) so as to oscillate with respect to said engine (1), at least one rod (6), hinged at a first end (5) to said frame (2) of the vehicle near the intersection point between said frame (2) and the vertical line A-A' passing through the centre of the back wheel (13) and at the other end near the hinging fulcrum (14) of said fork (3) to said engine (1), and at least one strut (8), situated in an advanced position with respect to the vertical line passing through the centre of the back wheel (13) between said rod (6) and said fork (3).

## Description

The present invention relates to a rear suspension system for motor vehicles, in particular for two-wheel vehicles.

With the increase in engine weight of scooters, due to their increased power, the rear suspensions have become less efficient as a result of the suspended mass/non-suspended mass weight which is particularly unfavourable.

The increase in speed performances, moreover, has brought the structural scheme of scooters with oscillating engines under discussion, for the fact of said mass being situated in such a rear and low position.

Several solutions have been proposed for solving the above problems, among which that of producing larger scooters with the engine in the centre of the vehicle, fixed to the frame by the interposing of rubber silent-blocks for filtering the vibrations, leaving only the final transmission, contained in a carter, as oscillating part of the suspension.

With these solutions, the struts (normally two) are positioned almost vertically near the back wheel pin, to release the vertical forces coming from the road directly onto the frame without affecting the engine in any way.

In this way, the above vertical forces do not precharge the silent-blocks situated between the frame and engine and consequently their function as filter of the engine vibrations is not contrasted.

This causes an increase in the encumbrances, a poor progressiveness of the suspension (defined as a derivative of the ratio of the wheel run with respect to the strut run) and an inaesthetic appearance of the overall structure of the vehicle.

Alternatively, for reducing the problem of encumbrance in order to increase, for example, the dimension of the under-seat space or to provide the vehicle with side containers, the strut must be moved forwards, bringing it, for example, close to the hinging pin of the fork.

A similar arrangement implies the passage of the vertical forces, exchanged by the back wheel with the ground, to the frame. In particular, in the form of vertical forces acting on the engine support silent-blocks if the strut remains vertical, and in the form of vertical and horizontal forces, if the strut is tilted with respect to the vertical axis.

In view of what is specified above, there is an evident necessity for availing of a rear suspension system, such as that of the present invention, which reduces the transmission of vertical and horizontal forces to the engine and at the same time reduces the encumbrance of the strut in correspondence with the rear end of the vehicle, improving its aesthetical appearance.

An objective of the present invention is therefore to solve the problems of the known art, by providing a rear suspension system which allows the advanced positioning, and possibly tilted with respect to the vertical axis, of the strut without increasing the load on the fulcrum of the fork deriving from vertical forces acting on the back wheel.

A further objective of the present invention is to provide a rear suspension system which allows the advanced positioning, and possibly tilted with respect to the vertical axis, of the strut without putting the silent-blocks in a pre-charged condition.

Another objective of the present invention is to provide a rear suspension system which necessitates the advanced positioning, and possibly tilted with respect to the vertical axis, of a strut, leaving the rear end of the vehicle free for aesthetical reasons and for a lesser encumbrance.

Yet another objective of the present invention is to provide a rear suspension system having progressiveness of the suspension.

Finally, an additional objective of the present invention is to provide a rear suspension system which is particularly simple, functional and at relatively limited costs.

These and other objectives according to the present invention are achieved by providing a rear suspension system as specified in claim 1.

Further characteristics of the device are object of the dependent claims.

The characteristics and advantages of a rear suspension system according to the present invention will appear more evident from the following illustrative and non-limiting description, referring to the enclosed schematic drawings, in which:
- figure 1 is a schematic side view of a first embodiment of the system according to the present invention;
- figure 2 is a schematic side view of a second embodiment of the system according to the present invention;
- figure 3 is a schematic perspective view of the rod compensator of the embodiment of the present invention illustrated in figure 2;
- figure 4 is a schematic side view of a third embodiment of the system according to the present invention;
- figure 5 is a schematic perspective view of the rod compensator of the embodiment of the present invention illustrated in figure 4;
- figure 6 is a schematic side view of a fourth embodiment of the system according to the present invention;
- figure 7 is a schematic side view of a vehicle equipped with the rear suspension system of figure 6.

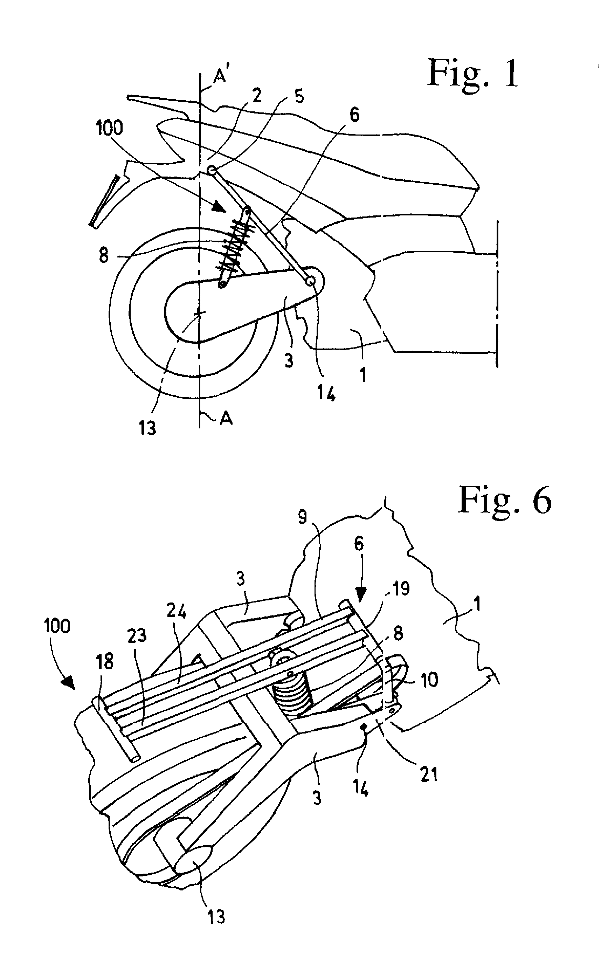

With reference to figure 1, this shows a rear suspension system according to the present invention, indicated as a whole with 100.

The rear suspension system 100 for vehicles and in particular for two-wheel vehicles of the type equipped with an engine 1, connected to the frame 2, and an oscillating end drive, enclosed in a carter.

The engine 1 is situated in a central position with respect to the vehicle and is connected to the frame 2 by means of silent-blocks or connecting rods with a hinging axis transversal to the vehicle, the latter are coupled with a rubber buffer which limits the oscillations to a few mm.

Alternatively, the engine 1 is constrained to the frame by means of equivalent elastic systems suitable however for reducing the passage of the vibrations from the engine 1 to the frame 2.

The system 100 according to one of its first embodiments, shown in figure 1, has at least one rear fork 3, hinged to the carter of the engine 1 in 14 so as to oscillate with respect to the latter, at least one rod 6, hinged at a first end in 5 to the frame 2 of the vehicle and at the other end at the hinging fulcrum 14 of the fork 3 to the engine 1.

In detail, the rod 6 is hinged at a first end to the frame 2 of the vehicle near the intersection point between the frame 2 of the vehicle and vertical line A-A' passing through the centre 13 of the back wheel and at the other end to the fork 3 near the hinging fulcrum 14 of said fork to the engine 1.

In the present description, near a point means the point itself or a space close to it.

According to this first embodiment, at least one strut 8 is situated between the rod 6 and the fork 3 in an advanced position with respect to the vertical line A-A' passing through the centre of the back wheel 13.

In detail, the upper end of the strut 8 is hinged to the rod 6, whereas the lower end of the strut 8 is hinged to the fork 3.

This consequently solves problems relating to the encumbrance and aesthetical appearance of the rear portion of the vehicle and increases the progressiveness of the suspension.

According to this scheme, it is possible however for the vertical forces which act on the back wheel, due, for example, to disjointedness of the road surface, during the compression of the strut, to create a rotation, in an anticlockwise direction, of the rod 6 with respect to the upper hinging point 5 and consequently a forward shift of the engine unit 1.

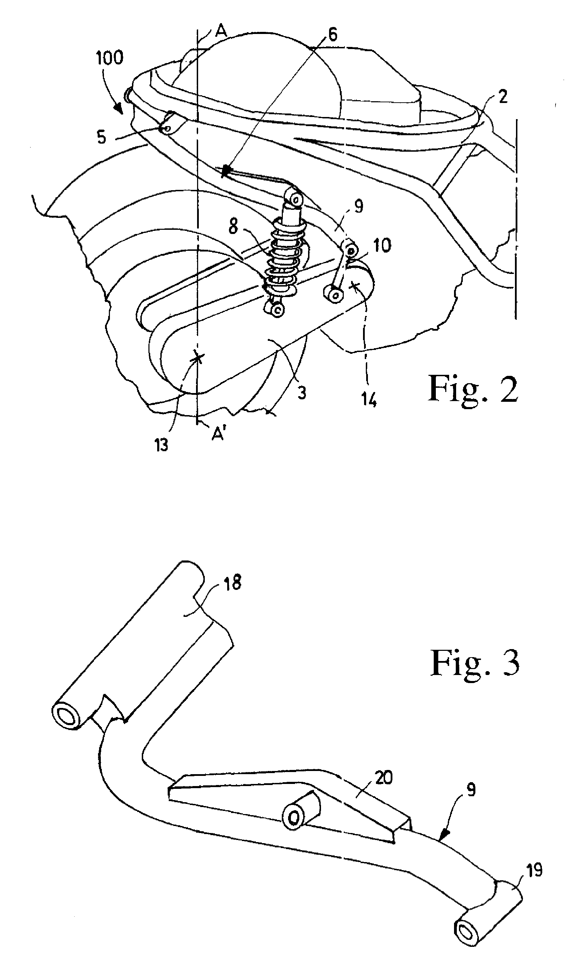

To prevent this from happening, the rod 6 is separated into two elements, as shown in figures 2-7.

In detail, a rod compensator 9 and a tie-rod 10.

The rod compensator 9 is hinged at a first end to the frame of the vehicle 2, always in correspondence with or in any case close to the vertical line A-A' passing through the centre 13 of the back wheel, and at the other end to the tie-rod 10.

The latter is hinged in correspondence with the remaining end to the fork 3 of the vehicle, near the hinging fulcrum 14 of the fork 3 to the engine 1.

Also in this case, the strut 8 is in a forward position with respect to the vertical line A-A' passing through the centre of the back wheel 13 between the rod compensator 9 and the fork 3.

In detail, the upper end of the strut 8 is hinged, by known means, to the rod compensator 9, whereas the lower end of the strut 8 is hinged, again by known means, to the fork 3.

The position of the strut 8 is directly connected to the length and position of the tie-rod 10.

As indicated above, the tie-rod 10, in addition to being hinged to the rod compensator 9, is hinged to the fork 3 near the hinging fulcrum 14 of the fork 3 to the engine.

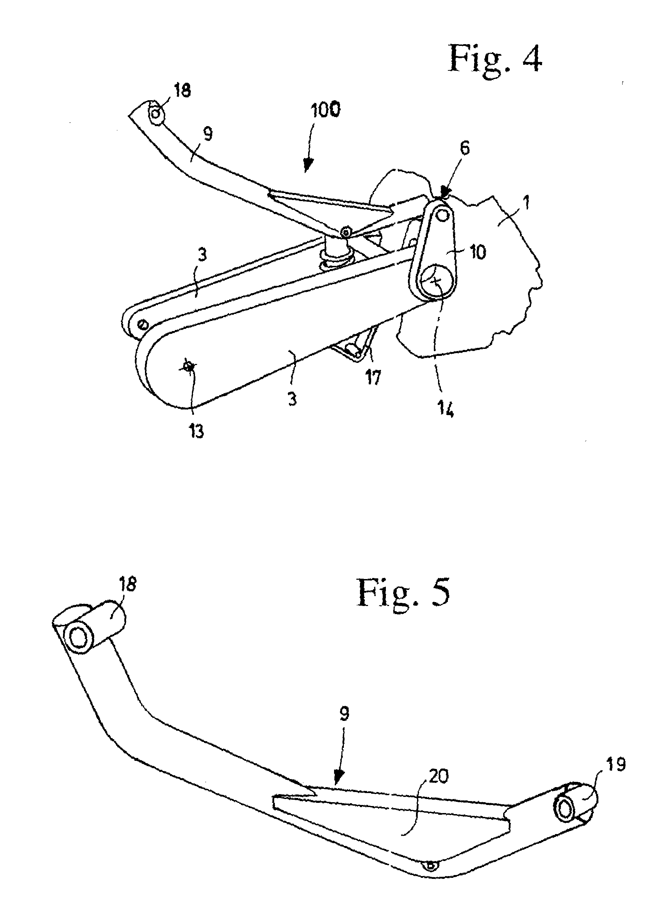

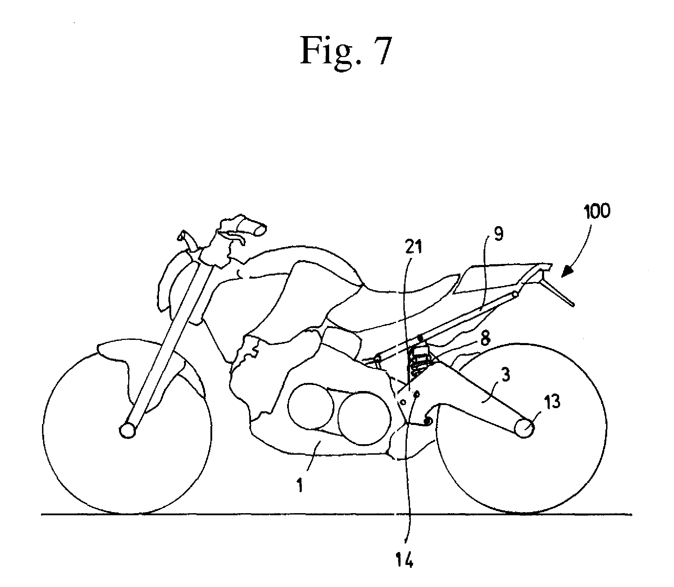

In particular, the tie-rod 10 can be exactly hinged on the hinging fulcrum 14 of the fork 3 to the engine 1, as shown, for example, in figure 4, near the fulcrum, but in front of this, as shown in figure 6, or close to the fulcrum 14, but behind this, as shown, on the other hand, in figure 2.

Figures 2-3 show a preferred embodiment of the present invention in which the tie-rod 10 is hinged to the fork 3 close to the hinging fulcrum 14, but behind this.

In detail, as shown in figure 3, the rod compensator 9, produced in a single piece, has two hinging housings or sleeves 18, 19 at the ends, for the frame 2 and for the tie-rod 10, respectively, and a reinforcing bracket 20 for the hinging of the upper end of the strut 8.

In this case, the strut 8 is hinged, as shown in figure 2, directly to the fork 3.

Figures 4-5 show an embodiment in which the tie-rod 10 is hinged exactly in correspondence with the hinging fulcrum 14.

In detail, also in this case, as shown in figure 5, the rod compensator 9, produced in a single piece, has two hinging housings or sleeves 18, 19 at the ends, for the frame 2 and for the tie-rod 10, respectively, and a reinforcing bracket 20 for the hinging of the upper end of the strut 8.

In this case, the strut 8 is hinged to the fork 3 by means of a bracket 17 situated, as shown in figure 4, beneath the fork itself.

Figures 6-7 show an embodiment of the rear suspension system 100 according to the present invention completely similar to the previous one, with the exception of the tie-rod 10 has been positioned on the opposite side of the strut 8 with respect to the fulcrum 14 of the fork 3.

In other words, the tie-rod 10 is hinged close to the hinging fulcrum 14 of the fork 3 to the carter of the engine 1, but in front of it.

For this purpose, the fork 3 has a hinging bracket 21 for the tie-rod 10.

The rod compensator 9, produced in a single piece, has a main body consisting of two bars 23, 24, substantially parallel, which sustain, at the two ends, the sleeves 18, 19.

According to this scheme, the strut 8 is contemporaneously compressed at the two ends.

The ratio of the wheel-stroke with respect to the strut stroke is therefore reduced to about 3 pur, in this case, the strut 8 can be positioned near the engine 1.

The characteristics of the system or object of the present invention are evident from the above description, as are the relative advantages, among which the following can be mentioned:
- increase in the progressiveness of the rear suspension;
- reduction in the forces on the constraining silent-blocks or connecting rods of the engine to the frame;
- reduction in the encumbrance in correspondence with the rear end of the vehicle;
- improvement in the aesthetical appearance of the vehicle;
- simplicity in construction and functionality;
- relatively low production costs.

Finally, the system thus conceived can evidently undergo numerous modifications and variations, all included in the invention; furthermore, all the details can be substituted with technically equivalent elements. In practice, the materials used as also the dimensions can vary according to technical requirements.

## Claims

1. A rear suspension system (100) for vehicles and in particular for two-wheel vehicles equipped with an engine (1), connected to the frame (2), and with an oscillating drive group, **characterized in that** it comprises at least one rear fork (3), hinged to the engine so as to oscillate with respect to said engine (1), at least one rod (6), hinged at a first end (7) to said frame (2) of the vehicle, near the intersection point between said frame (2) and the vertical line A-A' passing through the centre of the back wheel (13) and at the other end near the hinging fulcrum (14) of said fork (3) to said engine (1), and at lest one strut (8), situated between said rod (6) and said fork (3), in an advanced position with respect to the vertical line A-A' passing through said centre (13) of the back wheel.

2. The system (100) according to claim 1,
**characterized in that** said at least one strut (8) is hinged in correspondence with its upper end to said rod (6) and in correspondence with the lower end to said fork (3).

3. The system (100) according to claim 1,
**characterized in that** said rod (6) comprises a rod compensator (9) and a tie-rod (10).

4. The system (100) according to claim 3,
**characterized in that** the rod compensator (9) is hinged at a first end to the frame of the vehicle (2) near the intersection point between the frame (2) and the vertical line A-A', passing through the centre of the back wheel (13) and at the other end to the tie-rod (10).

5. The system (100) according to claim 3 or 4,
**characterized in that** said tie-rod (10) is hinged in correspondence with one end to the fork (3) of the vehicle in correspondence with the hinging fulcrum (14) of the fork (3) to said engine (1).

6. The system (100) according to claim 3 or 4,
**characterized in that** said tie-rod (10) is hinged at one end near the hinging fulcrum (14) of the fork (3) to the engine (1), in front of said fulcrum (14).

7. The system (100) according to claim 3 or 4,
**characterized in that** said tie-rod (10) is hinged at one end near the hinging fulcrum (14) of the fork (3) to the engine (1), behind said fulcrum (14).
